# EUROPÄISCHE PATENTANMELDUNG

(11) **EP 4 279 466 A1**
(43) Veröffentlichungstag der Anmeldung: **22.11.2023**
(21) Anmeldenummer: 22173843.8
(22) Anmeldetag: 17.05.2022
(51) Int. Cl.: C04B 20/02

(54) **VERFAHREN ZUM AUFBEREITEN VON AUSBAUASPHALT**

(71) Anmelder: STRABAG AG, 50679 Köln (DE); Storimpex Asphaltec GmbH, 21509 Glinde (DE)
(72) Erfinder: WOHLERT, Marcus, 23626 Ratekau (DE); ROEWER, Mario, 08060 Zwickau (DE); SIKINGER, Thomas, 21357 Bardowick (DE)
(74) Vertreter: Neumann Müller Oberwalleney Patentanwälte PartG mbB

(57) **Zusammenfassung**

Verfahren zum Aufbereiten von Ausbauasphalt umfassend die Schritte:
Zerkleinern (1) des Ausbauasphalts zu Asphaltgranulat (5),
Aufbrechen (6) des Asphaltgranulats (5) in Bitumensand (9) und Gesteinskörnung (10),
Trennen (8) des Bitumensands (9) von der Gesteinskörnung (10), und
Zugabe (11) eines Rejuvenators zum Bitumensand (9).

## Beschreibung

Die Erfindung betrifft ein Verfahren zum Aufbereiten von Ausbauasphalt.

Asphalt ist ein Gemisch aus Bitumen oder bitumenhaltigem Bindemittel und Gesteinskörnung sowie gegebenenfalls weiteren Zuschlägen oder Zusätzen. Das Haupteinsatzgebiet von Asphalt ist der Bau von Straßen und Verkehrsflächen. Asphalt ist der Alterung unterworfen, wobei es zu Eigenschaftsveränderungen, insbesondere zu einer Versprödung des im Asphalt enthaltenen Bitumens, kommt. Der Alterungsprozess führt dazu, dass nach einer gewissen Zeit die Straßen oder Verkehrsflächen nicht mehr den in sie gesetzten Anforderungen gerecht werden und die Flächen ersetzt werden müssen.

Die Wiederverwendung von Ausbauasphalt im gebundenen Straßenoberbau erfolgt seit mehreren Jahrzehnten. Im Straßenbau wird die Asphaltsschicht aufgebrochen oder abgefräst. Der so gewonnene Ausbauasphalt kann weiter aufbereitet werden. Der durch den Rückbau von Straßen und Verkehrsflächen gewonnene Ausbauasphalt kann jedoch, aufgrund des gealterten Zustands des in ihm enthaltenen Bitumens, nicht ohne weiteres wieder verwendet werden. Die Alterung führt dazu, dass das Bitumen nicht mehr den Anforderungen einer neuen Asphaltdecke entspricht. Daher ist eine Zugabe von Ausbauasphalt bei der Herstellung eines neuen Asphaltmischgutes nur begrenzt möglich.

Aus der EP 3 530 806 A1 ist ein Verfahren bekannt, bei dem der Ausbauasphalt zerkleinert wird, um Asphaltgranulat zu erhalten, das aus Gesteinskörnung mit anhaftendem Bitumen besteht. Dem Asphaltgranulat wird ein Rejuvenator zugegeben, um der Versprödung des Bitumens entgegenzuwirken. Durch die Zugabe von Rejuvenatoren wird zum Beispiel die Viskosität des Bitumens verringert. Das so aufbereitete Asphaltgranulat wird dann in einem Mischer einem Primärasphalt zugegeben. Aufgrund der verbesserten Eigenschaften des im Ausbauasphalt enthaltenen Bitumens durch den Einsatz von Rejuvenatoren kann ein höherer Anteil an Ausbauasphalt bei der Herstellung eines neuen Asphaltmischgutes zugegeben werden.

Um den Einsatz von Primärrohstoffen weiter zu reduzieren, ist jedoch eine gezieltere Aufbereitung des Asphaltgranulats erforderlich.

Aufgabe der vorliegenden Erfindung ist es daher, die Aufbereitung von Asphaltgranulat effizienter zu gestalten.

Die Aufgabe wird durch ein Verfahren zum Aufbereiten von Ausbauasphalt mit den folgenden Schritten gelöst:
- Zerkleinern des Ausbauasphalts zu Asphaltgranulat,
- Aufbrechen des Asphaltgranulats in Bitumensand und Gesteinskörnung,
- Trennen des Bitumensands von der Gesteinskörnung, und
- Zugabe eines Rejuvenators zum Bitumensand.

Gemäß diesem Verfahren wird nicht bereits das Asphaltgranulat, also die Gesteinskörnung mit anhaftendem Bitumen, für die Wiederverwendung benutzt, sondern das Asphaltgranulat zunächst aufgebrochen, um Bitumensand und Gesteinskörnung zu erhalten. Die Gesteinskörnung ist dabei zumindest weitestgehend von Bitumen befreit. Zur Vorbereitung der Weiterverarbeitung des Bitumensands wird dieser mit zumindest einem Rejuvenator versetzt, sodass der aufbereitete Bitumensand hinsichtlich seiner durch die Alterung verschlechterten physikalischen Eigenschaften verbessert wird und bei der Herstellung eines neuen Asphaltmischgutes verwendet werden kann. Durch die Zugabe von Rejuvenatoren bei der Aufbereitung des Bitumensands besteht die Möglichkeit, die Eigenschaften des gealterten Bitumens dahingehend positiv zu beeinflussen, dass zum Beispiel die Viskosität des Bitumens verringert wird. Rejuvenatoren und deren Einsatz sind hinlänglich bekannt. Rejuvenatoren sind Zusätze, die zur Herstellung von Asphaltmischgut mit erhöhtem Anteil an Recycling-Asphalt entwickelt worden sind. Es handelt sich im Allgemeinen um auf pflanzliche und mineralische Öle basierende flüssige Bindemittelzusätze mit Anteilen an geeigneten Zusätzen, welche die flüssige Phase des gealterten Bitumens verjüngen und ergänzen soll.

Von Vorteil bei dem erfindungsgemäßen Verfahren ist, dass die Menge des zugegebenen Rejuvenators an die Menge des Bitumensands und an dessen physikalische Eigenschaften angepasst werden kann. Es kann somit eine hocheffiziente Verbesserung der physikalischen Eigenschaften des Bitumens erzielt werden.

Darüber hinaus kann die von Bitumen befreite Gesteinskörnung auch in anderen Anwendungsfeldern, bei denen die Gesteinskörnung keinen Bitumen oder nur einen geringen Anteil hiervon aufweisen darf, verwendet werden.

In einem weiteren Verfahrensschritt kann nach dem Zerkleinern des Ausbauasphalts angefallener Bitumensand vom Asphaltgranulat getrennt werden. Somit wird bereits in einem frühen Verfahrensschritt, also vor dem Aufbrechen des Asphaltgranulats, eventuell anfallender Bitumensand extrahiert.

Das Trennen des Bitumensands kann durch Sieben erfolgen, wobei der Bitumensand eine Fraktion mit einer maximalen vorbestimmten Korngröße ist. Dies kann für das Trennen des Bitumensands von der Gesteinskörnung nach dem Aufbrechen des Asphaltgranulats und/oder für das Trennen des Bitumensands vom Asphaltgranulat nach dem Zerkleinern des Ausbauasphalts vorgesehen sein. Die vorbestimmte Korngröße kann zum Beispiel zwischen 4 mm und 8 mmm, insbesondere 5 mm betragen.

Das Zerkleinern des Ausbauasphalts zu Asphaltgranulat kann mittels eines Granulators erfolgen, wobei im Ausbauasphalt enthaltene Gesteinskörnung zum größten Teil ungebrochen im Asphaltgranulat enthalten bleibt. Der Ausbauasphalt liegt in der Regel in Form von Fräsgut vor, dass Asphaltplatten bzw. Asphaltschollen beinhaltet, die beim Ausbau einer Asphaltdecke entstanden sind. Das Fräsgut wird vom Granulator in ein Asphaltgranulat mit geringerer Korngröße zerkleinert, wobei ein Brechen der im Asphalt enthaltenen Gesteinskörnung weitestgehend vermieden werden soll.

Hierbei kann der Ausbauasphalt in Asphaltgranulat mit einer Korngröße von überwiegend über 4 mm bis 8 mm, insbesondere über 5 mm zerkleinert werden.

Das Aufbrechen des Asphaltgranulats in Bitumensand und Gesteinskörnung kann mittels eines Brechers, insbesondere eines Rotationsbrechers erfolgen.

Während des Aufbrechens kann entstandener Staub mittels eines Staubabscheiders abgeschieden werden, der dem Bitumensand zugeführt wird.

Bei der Wiederverwendung des Bitumensands zur Herstellung von Asphaltmischgut kann dem Bitumensand Primärbitumen zugemischt werden. Als Primärbitumen wird Bitumen bezeichnet, der unmittelbar durch die Aufbereitung von Erdöl hergestellt wurde und noch nicht anderweitig verwendet wurde.

Bei der Wiederverwendung des Bitumensands zur Herstellung von Asphaltmischgut kann dem Bitumensand zudem Primärgesteinskörnung zugemischt werden. Als Primärgesteinskörnung wird Gesteinskörnung bezeichnet, die unmittelbar aus natürlichen Lagerstätten gewonnen wurde. Es kann jedoch auch aus anderen Quellen wiederverwendete Gesteinskörnung verwendet werden.

Bei der Herstellung von Asphaltmischgut kann ferner aufbereitete Gesteinskörnung aus dem Asphaltgranulat zugemischt werden.

Das erfindungsgemäße Verfahren wird im Folgenden anhand der Figuren näher erläutert. Hierin zeigt
- Figur 1: ein Ablaufdiagramm eines erfindungsgemäßen Verfahrens zum Aufbereiten von Ausbauasphalt,
- Figur 2: eine Darstellung zur Verdeutlichung der Herstellung von Asphaltmischgut und
- Figur 3: eine Draufsicht einer Aufstellung von Maschinen zur Durchführung des Verfahrens gemäß Figur 1.

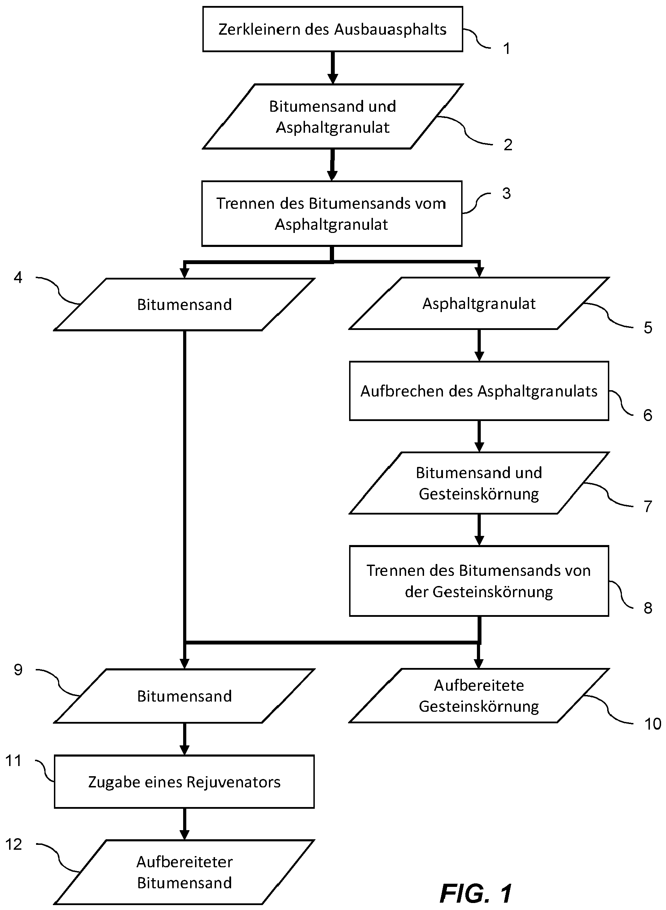

Figur 1 zeigt den Verfahrensablauf zum Aufbereiten von Ausbauasphalt. Der Ausbauasphalt, der durch das Aufbrechen oder Abfräsen einer Asphaltsschicht, insbesondere aus dem Straßenbau, gewonnen wurde, wird in einem ersten Verfahrensschritt 1 zerkleinert, sodass Asphaltgranulat 5 oder ein Gemisch 2 aus Asphaltgranulat 5 und eventuell entstandenem Bitumensand 4 gewonnen wird. Als Asphaltgranulat 5 werden hierbei diejenigen Bestandteile bezeichnet, die eine Korngröße größer oder gleich einem vorbestimmten Wert aufweisen. Alle Bestandteile, deren Korngröße kleiner als der vorbestimmte Wert ist, werden als Bitumensand 4 definiert. Der Ausbauasphalt besteht aus größeren Bruchstücken, die jeweils eine Vielzahl von Körnern einer Gesteinskörnung enthalten, die durch Bitumen als Bindemittel gebunden sind. Durch das Zerkleinern entsteht im Wesentlichen Asphaltgranulat 5, das aus einzelnen Körnern der Gesteinskörnung 10 besteht, wobei an den einzelnen Körnern der Gesteinskörnung 10 Bitumen haftet. Zusätzlich können Bestandteile mit einer geringeren Korngröße entstehen, die in der Regel keine Gesteinskörnung enthalten, sondern vornehmlich Bitumen oder andere Zuschläge.

Daher wird in einem nächsten Verfahrensschritt 3 der Bitumensand 4 vom Asphaltgranulat 5 getrennt. Dies kann zum Beispiel durch Sieben erfolgen.

In einem weiteren Verfahrensschritt 6 wird das Asphaltgranulat 5 aufgebrochen und ein Gemisch 7 aus Bitumensand 9 und Gesteinskörnung 10 gewonnen. Bei dem Bitumensand 9 handelt es sich im Wesentlichen um das von der Gesteinskörnung 10 entfernte Bitumen und eventuell enthaltene Zusätze. Die Gesteinskörnung 10 ist weitestgehend von Bitumen befreit.

In einem sich daran anschließenden Verfahrensschritt 8 wird der Bitumensand 9 von der Gesteinskörnung 10 getrennt, sodass eine Fraktion reiner Bitumensand 9, dem auch der Bitumensand aus dem Verfahrensschritt 4 zugeführt wird, und eine Fraktion 10 aufbereitete Gesteinskörnung 10 vorliegt.

In einem sich daran anschließenden Verfahrensschritt 11 wird dem Bitumensand 9 zumindest ein Rejuvenator zugegeben, um aufbereiteten Bitumensand 12 mit verbesserten physikalischen Eigenschaften zu erhalten. Das Bitumen, das durch die ursprüngliche Verwendung einer Alterung unterlag, ist in der Regel versprödet, wobei Rejuvenatoren dazu beitragen, die Versprödung zu reduzieren und die Viskosität zu verringern.

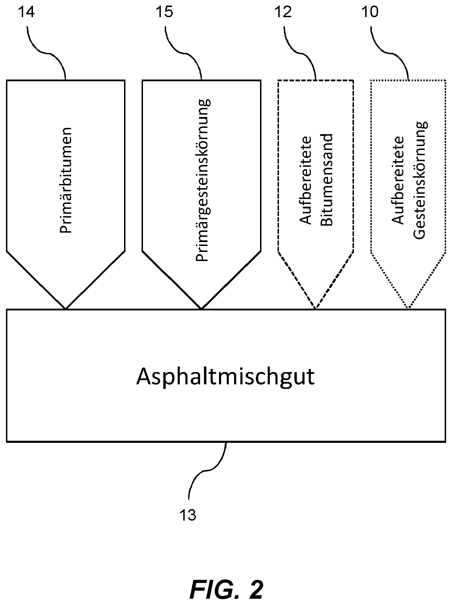

Figur 2 zeigt die Zusammensetzung von Asphaltmischgut 13 mit wiederaufbereiteten Bestandteilen. Neues Asphaltmischgut 13 wird durch Mischen von Primärbitumen 14 und Primärgesteinskörnung 15 hergestellt, wobei gegebenenfalls weitere Zusätze und Zuschläge enthalten sein können. Zu einem gewissen Grad werden der aufbereitete Bitumensand 12 und/oder die aufbereitete Gesteinskörnung 10 zugemischt.

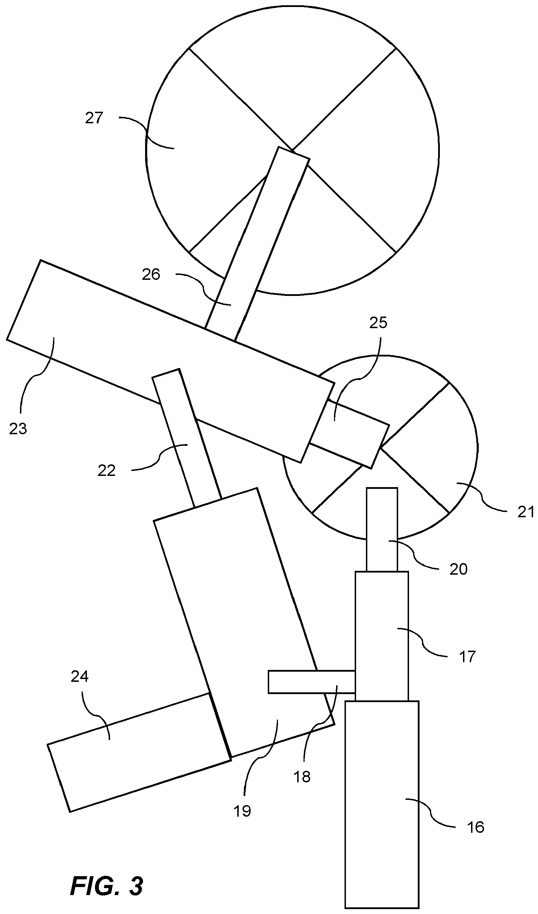

Figur 3 zeigt eine Draufsicht einer Aufstellung von Maschinen zur Durchführung des voran beschriebenen Verfahrens. Figur 3 zeigt einen Granulator 16, dem Ausbauasphalt zugeführt wird. In dem Granulator 16 wird der Ausbauasphalt aufgebrochen und einer Siebanlage 17 zugeführt. In der Siebanlage 17 wird Asphaltgranulat ausgesiebt und über ein Förderband 18 einem Brecher 19 zugeführt. Materialbestandteile, deren Korngröße unter einem vorbestimmten Wert liegt, werden von der Siebanlage 17 einem weiteren Förderband 20 zugeführt, welches die Bestandteile mit kleinerer Korngröße auf einen Schüttkegel 21 aufschüttet. Hierbei handelt es sich um Bitumensand.

In dem Brecher 19 wird das Asphaltgranulat aufgebrochen und einem Förderband 22 zugeführt. Dieses fördert das aufgebrochene Asphaltgranulat einer weiteren Siebanlage 23 zu. In der Siebanlage 23 wird wiederum Bitumensand von Gesteinskörnung getrennt. Bitumensand mit einer Korngröße unter dem vorbestimmten Wert wird über ein Förderband 25 dem Schüttkegel 21 zugeführt. Gesteinskörnung gleich oder über dem vorbestimmten Wert wird über ein Förderband 26 auf einen Schüttkegel 27 für Gesteinskörnung gefördert.

Der Brecher 19 ist mit einem Staubabscheider 24 versehen, wobei der abgeschiedene Staub ebenfalls dem Schuttkegel 21 für Bitumensand zugeführt wird.

### Bezugszeichenliste

- 1: Verfahrensschritt des Zerkleinerns des Ausbauasphalts
- 2: Gemisch aus Bitumensand und Asphaltgranulat
- 3: Verfahrensschritt des Trennen des Bitumensands vom Asphaltgranulat
- 4: Bitumensand
- 5: Asphaltgranulat
- 6: Verfahrensschritt des Aufbrechens des Asphaltgranulats
- 7: Gemisch aus Bitumensand und Gesteinskörnung
- 8: Verfahrensschritt des Trennen des Bitumensands von der Gesteinskörnung
- 9: Bitumensand
- 10: Aufbereitete Gesteinskörnung
- 11: Verfahrensschritt der Zugabe eines Rejuvenators
- 12: Aufbereiteter Bitumensand
- 13: Asphaltmischgut
- 14: Primärbitumen
- 15: Primärgesteinskörnung
- 16: Granulator
- 17: Siebanlage
- 18: Förderband
- 19: Brecher
- 20: Förderband
- 21: Schüttkegel für Bitumensand
- 22: Förderband
- 23: Siebanlage
- 24: Staubabscheider
- 25: Förderband
- 26: Förderband
- 27: Schüttkegel für Gesteinskörnung

## Patentansprüche

1. Verfahren zum Aufbereiten von Ausbauasphalt umfassend die Schritte:
Zerkleinern (1) des Ausbauasphalts zu Asphaltgranulat (5),
Aufbrechen (6) des Asphaltgranulats (5) in Bitumensand (9) und Gesteinskörnung (10),
Trennen (8) des Bitumensands (9) von der Gesteinskörnung (10), und Zugabe (11) eines Rejuvenators zum Bitumensand (9).

2. Verfahren nach Anspruch 1,
**dadurch gekennzeichnet,**
**dass** nach dem Zerkleinern (1) des Ausbauasphalts angefallener Bitumensand (4) vom Asphaltgranulat (5) getrennt wird.

3. Verfahren nach Anspruch 1 oder 2,
**dadurch gekennzeichnet,**
**dass** das Trennen (3, 8) des Bitumensands (6) durch Sieben erfolgt, wobei der Bitumensand (4, 6) eine Fraktion mit einer maximalen vorbestimmten Korngröße ist.

4. Verfahren nach Anspruch 3,
**dadurch gekennzeichnet,**
**dass** die vorbestimmte Korngröße 3 mm bis 9 mm, insbesondere 5 mm beträgt.

5. Verfahren nach einem der Ansprüchen 1 bis 4,
**dadurch gekennzeichnet,**
**dass** das Zerkleinern (1) des Ausbauasphalts zu Asphaltgranulat (5) mittels eines Granulators (16) erfolgt, wobei im Ausbauasphalt enthaltene Gesteinskörnung zum größten Teil ungebrochen im Asphaltgranulat enthalten bleibt.

6. Verfahren nach einem der Ansprüchen 1 bis 5,
**dadurch gekennzeichnet,**
**dass** das Aufbrechen (6) des Asphaltgranulats (5) in Bitumensand (9) und Gesteinskörnung (10) mittels eines Brechers (19), insbesondere eines Rotationsbrechers erfolgt.

7. Verfahren nach Anspruch 6,
**dadurch gekennzeichnet,**
**dass** während des Aufbrechens (6) Staub mittels eines Staubabscheiders (24) abgeschieden wird, wobei der Staub dem Bitumensand (9) zugeführt wird.
